(19) Europäisches Patentamt
European Patent Office
Office européen des brevets

(11) **EP 3 474 466 B1**

(12) **EUROPEAN PATENT SPECIFICATION**

(45) Date of publication and mention
of the grant of the patent:
**02.03.2022 Bulletin 2022/09**

(21) Application number: **17812568.8**

(22) Date of filing: **02.06.2017**

(51) International Patent Classification (IPC):
**H04B 10/61** (2013.01)

(52) Cooperative Patent Classification (CPC):
**H04B 10/61**

(86) International application number:
**PCT/CN2017/086986**

(87) International publication number:
**WO 2017/215457 (21.12.2017 Gazette 2017/51)**

(54) **DAMAGE COMPENSATION METHOD AND APPARATUS**

VERFAHREN UND VORRICHTUNG ZUR SCHADENKOMPENSATION

APPAREIL ET PROCÉDÉ DE COMPENSATION DE DOMMAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.06.2016 CN 201610440632**

(43) Date of publication of application:
**24.04.2019 Bulletin 2019/17**

(73) Proprietor: **ZTE Corporation
Shenzhen, Guangdong 518057 (CN)**

(72) Inventors:
• **DU, Zhiyun
Shenzhen
Guangdong 518057 (CN)**
• **CAI, Yi
Shenzhen
Guangdong 518057 (CN)**
• **ZHOU, Weiqin
Shenzhen
Guangdong 518057 (CN)**
• **YUAN, Lei
Shenzhen
Guangdong 518057 (CN)**

(74) Representative: **Ipsilon
Le Centralis
63, avenue du Général Leclerc
92340 Bourg-la-Reine (FR)**

(56) References cited:
CN-A- 101 834 816      CN-A- 104 348 553
CN-A- 104 348 553      US-A1- 2011 255 574
US-A1- 2011 255 574    US-A1- 2012 301 134
US-A1- 2012 301 134

## Description

## TECHNICAL FIELD

The present disclosure relates to the field of optical communication technology, and in particular, to a loss compensation method and device.

## BACKGROUND

For most of the existing coherent-detection optical modules, such as CFP/CFP2 (C form-factor pluggable 2), an application specific integrated circuit (ASIC) and an optical transceiver is packaged in a module, bringing problems of being large in size, high power consumption, high cost, and being not flexible.

The ASIC and the optical transceiver can be separated in order to reduce the cost of coherent equipment and improve the flexibility of the optical module, and can be connected by a connector when being used. CFP2-ACO (C form-factor pluggable 2-analog coherent optics) standard is based on the above conception. CFP2-ACO is a standard for pluggable analog coherent optical module CFP2 technology, which defines a connection between the ASIC and the optical transceiver via CFP2 connector when being used. However, this may incur the problem that: large return interference and insert loss may occur at interfaces of the connector and internal wirings of the optical module, bringing non-negligible performance loss to a system.

In summary, is has become an urgent problem to be solved to provide a loss compensation scheme, which can applied to a scenario where an the ASIC and the optical module are separated and can reduce the performance loss caused by return interference and insert loss generated at the interfaces of the connector and the internal wirings of the optical module.

Document CN104348553 A1 discloses a CFP optical transceiver module, wherein multiple optical transmitting assemblies convert electric signals into optical signals and output the optical signals to an optical wavelength division multiplexer. One optical isolator is used after the transmitted light passes through the optical wavelength division multiplexer to achieve antireflection requirements of all channels.

## SUMMARY

The embodiment of the disclosure provides a loss compensation method and device to solve at least a problem in existing art, reducing the performance loss caused by return interference and insert loss generated at the interfaces of the connector and the internal wirings of the optical module.

The technical solution of the embodiment of the present disclosure is implemented as following.

An embodiment of the present disclosure provides a loss compensation method according to Claim 1.

In an embodiment, the method further includes steps of: determining a second compensation coefficient of a receiving end to equalize return interference and compensate for insert loss; and compensating a second digital signal at the receiving end based on the second compensation coefficient to obtain a second compensation signal, wherein the second digital signal is a signal obtained by performing analog-to-digital conversion on a signal outputted from the optical transceiver and transmitted through the connector.

In an embodiment, the method further includes steps of: compensating a second digital signal at a receiving end based on the first compensation coefficient to obtain a second compensation signal, wherein the second digital signal is a signal obtained by performing analog-to-digital conversion on a signal outputted from the optical transceiver and transmitted through the connector.

In an embodiment, the ASIC is connected to the optical transceiver through the connector, and the step of determining the first compensation coefficient of the transmitting end to equalize return interference and compensate for insert loss includes: determining the first compensation coefficient of the transmitting end to equalize the return interference and compensate the insert loss by using a preset adaptive equalization algorithm, including steps of: obtaining an estimated error $e(n)$, $e(n)=u(n)-y(n)$, wherein $u(n)$ is, at time $n$, a signal after analog-to-digital conversion on the first digital signal and before being passed through the connector, and $y(n)$ is the first output signal at time $n$; obtaining a cost function $J$ based on the estimated error $e(n)$, $J=E\{[u(n)-y(n)]^2\}$, wherein $E$ represents an expectation; obtaining

$$y(n) = \sum_{i=0}^{N-1} w(n)d(n-i)$$

, wherein $w(n)$ is the first compensation coefficient at time $n$, and $w(n+1)=w(n)+\mu*d(n)^**e(n)$, $d(n)$ is, at time $n$, a signal after analog-to-digital conversion on the first digital signal and being passed through the connector; and determining a value of the first compensation coefficient based on the cost function $J$ and the $y(n)$.

In an embodiment, the ASIC is connected to the optical transceiver through the connector, and the step of determining the first compensation coefficient of the transmitting end to equalize return interference and compensate for insert loss includes steps of: obtaining two or more sets of compensation coefficients by using a preset frequency response characteristic; and pre-compensating the first digital signal based on each set of compensation coefficients respectively, and determining a set of compensation coefficients which corresponds to a pre-compensated signal with a best quality as the first compensation coefficient.

In an embodiment, the ASIC is connected to the optical transceiver through the connector, and the step of determining the first compensation coefficient of the transmitting end to equalize return interference and compensate for insert loss includes: determining the first compensation coefficient of the transmitting end by using a preset manner of inserting training sequence, including steps of: determining a training sequence x(i), x(i+1), ..., x(i+P-1) having length P transmitted by the transmitting end, and a training data $x_1(i)$, $x_1(i+1)$,..., $x_1(i+P-1)$ having length P received by an input end of the connector; performing a Fourier transform on the training data received by the input end of the connector to obtain $X_1(k)=FFT(x_1)$; determining a training data $x_2(i)$, $x_2(i+1)$,..., $x_2(i+P-1)$ having length P received by the output end of the connector, and performing Fourier transform thereon to obtain $X_2(k)=FFT(x_2)$; and determining the transfer function as

$$H(k) = \frac{X_2(k)}{X_1(k)}$$, and obtaining the first compensation coefficient $h(n) = IFFT(\frac{1}{H(k)})$ based on the transfer function, wherein h(n) represents a coefficient of a filter for compensation.

An embodiment of the present disclosure further provides a loss compensation device according to Claim 7.

In an embodiment, the loss compensation device further includes: a second compensating module and a second determining module, wherein the second determining module is configured to determine a second compensation coefficient of a receiving end to equalize return interference and compensate for insert loss; and the second compensating module is configured to compensate a second digital signal at the receiving end based on the second compensation coefficient to obtain a second compensation signal, wherein the second digital signal is a signal obtained by performing analog-to-digital conversion on a signal outputted from the optical transceiver and transmitted through the connector.

In an embodiment, the loss compensation device further includes: a second compensating module configured to compensate a second digital signal at a receiving end based on the first compensation coefficient to obtain a second compensation signal, wherein the second digital signal is a signal obtained by performing analog-to-digital conversion on a signal outputted from the optical transceiver and transmitted through the connector.

In an embodiment, the ASIC is connected to the optical transceiver through the connector; the first determining module is further configured to determine the first compensation coefficient by using a preset adaptive equalization algorithm, and the first determining module is further configured to: obtain an estimated error e(n), e(n)=u(n)-y(n), wherein u(n) is, at time n, a signal after analog-to-digital conversion on the first digital signal and before being passed through the connector, and y(n) is the first output signal at time n; obtain a cost function J based on the estimated error e(n), J=E{[u(n)-y(n)]^2},

wherein E represents an expectation; obtain

$$y(n) = \sum_{i=0}^{N-1} w(n)d(n-i)$$, wherein w(n) is the first compensation coefficient at time n, and w(n+1)=w(n)+$\mu$*d(n)**e(n), d(n) is, at time n, a signal after analog-to-digital conversion on the first digital signal and being passed through the connector; and determine a value of the first compensation coefficient based on the cost function J and the y(n).

In an embodiment, the ASIC is connected to the optical transceiver through the connector; the first determining module is further configured to obtain two or more sets of compensation coefficients by using a preset frequency response characteristic; and pre-compensate the first digital signal based on each set of compensation coefficients respectively, and determine a set of compensation coefficients which corresponds to a pre-compensated signal with a best quality as the first compensation coefficient.

In an embodiment, the ASIC is connected to the optical transceiver through the connector, the first determining module is further configured to determine the first compensation coefficient of the transmitting end by using a preset manner of inserting training sequence, and the first determining module is further configured to: determine a training sequence x(i), x(i+1), ..., x(i+P-1) having length P transmitted by the transmitting end, and a training data $x_1(i)$, $x_1(i+1)$,..., $x_1(i+P-1)$ having length P received by an input end of the connector; perform a Fourier transform on the training data received by the input end of the connector to obtain $X_1(k)=FFT(x_1)$; determine a training data $x_2(i)$, $x_2(i+1)$,..., $x_2(i+P-1)$ having length P received by the output end of the connector, and perform Fourier transform thereon to obtain $X_2(k)=FFT(x_2)$; and

determine the transfer function as $$H(k) = \frac{X_2(k)}{X_1(k)}$$, and obtain the first compensation coefficient

$h(n) = IFFT(\frac{1}{H(k)})$ based on the transfer function, wherein h(n) represents a coefficient of a filter for compensation.

An embodiment of the present disclosure further provides a storage medium including a program stored thereon, wherein the program is executed to perform the loss compensation method described above.

An embodiment of the present disclosure further provides a processor configured to execute a program, wherein the program is executed to perform the loss compensation method described above.

In embodiments of the present disclosure, in a scenario where an Application Specific Integrated Circuit (ASIC) and an optical module are separated, the first compensation coefficient of the transmitting end is determined, and the first digital signal at the transmitter is pre-compensated based on the first compensation coefficient to obtain the first compensation signal, so that the pre-compensated signal is converted by the digital-to-analog converter and then input to the optical transceiver through the connector. At the same time, the second compensation coefficient of the receiving end to equalize return interference and compensate for insert loss may be determined, and then the second digital signal at the transmitter is compensated based on the second compensation coefficient to obtain the second compensation signal, the second digital signal is a signal obtained by performing analog-to-digital conversion on the signal outputted from the optical transceiver and transmitted through the connector. As such, performance loss caused by the return interference and the insert loss at the interfaces of the connector and the internal wirings of the optical module may be reduced by pre-compensating the first digital signal at the transmitting end and compensating the second digital signal at the receiving end, and affections by physical characteristics of an optical channel transmission line may be avoided since compensation for local loss are performed at the transmitting end and the receiving end, respectively.

## BRIEF DESCRIPTION OF THE DRAWINGS

FIG. 1 is a schematic structural diagram of an optical communication system in which a loss compensation method is applied, according to an embodiment of the present disclosure;

FIG. 2 is a schematic flowchart of a loss compensation method at a transmitting end, according to an embodiment of the present disclosure;

FIG. 3 is a schematic flowchart of a loss compensation method at a receiving end, according to an embodiment of the present disclosure;

FIG. 4 is a schematic diagram of a loss compensation method according to an embodiment of the present disclosure;

FIG. 5 is a schematic diagram of an adaptive equalization algorithm according to an embodiment of the present disclosure;

FIG. 6 is a schematic diagram illustrating performance comparison of a loss compensation system according to an embodiment of the present disclosure;

FIG. 7 is a schematic flowchart of a loss compensation method according to an embodiment of the present disclosure;

FIG. 8 is a schematic diagram of a loss compensation method according to an embodiment of the present disclosure;

FIG. 9 is a schematic flowchart of a loss compensation method according to an embodiment of the present disclosure;

FIG. 10 is a schematic diagram of a loss compensation method according to an embodiment of the present disclosure; and
FIG. 11 is a schematic structural diagram illustrating a composition of a loss compensation device according to an embodiment of the present disclosure.

## DETAILED DESCRIPTION

Return loss refers to attenuation due to signal reflection, when a high-frequency signal is transmitted in a communication device, upon encounter of a point with irregular wave impedance. The reflection not only causes an increase in transmission loss of the signal, but also causes interference on subsequent signals which may lead to distortion in transmission signal, having a great influence on transmission performance. The attenuation caused by signal reflection is called return loss, and the interference caused by signal reflection is called return interference. The return loss is calculated as $R = -10*lg(Pr/Pi)$, wherein Pr is a reflected power, and Pi is a incident power.

Insert loss refers to a loss of load power that occurs somewhere in the transmission system due to an insertion of components or devices. It is expressed as the ratio of a power (in unit of (dB)) received by a load before the component or device is inserted and a power (in unit of (dB)) received by the same load after the component or device is inserted. The insert loss is calculated as $G = -10*lg(Po/Pi)$, wherein Po is a output power, and Pi is a incident power.

During the implementation of the present disclosure, it is found that in a scenario where the ASIC and the optical module are separated, if the length of the wirings from the DSP in the ASIC to the connector for the optical module is 30 mm, then a delay $t1=L/C_{copper}=30*10^{-3}/(23*10^7)$s, the number of cycles occupied $T=t1/(25*10^9)$bps $\approx 3$, and a round-trip delay is $2*t1 \approx 6$ cycles. During metropolitan area transmission, return interference and insert loss will bring about 4~7.5dB performance loss to the system. However, in the field of optical communication, there is no effective solution to the problem of reducing the performance loss caused by return interference and insert loss at the interfaces of connection cables and the internal wirings of the optical module.

In an embodiment of the present disclosure, a first compensation coefficient of a transmitting end is determined to equalize return interference and compensate for insert loss, and a first digital signal is pre-compensated based on the first compensation coefficient to obtain a first compensation signal, then a digital-to-analog conversion is performed on the first compensation signal, and the converted signal is input to an optical transceiver through a connector.

The present disclosure will be further described in detail below with reference to the accompanying drawings and specific embodiments.

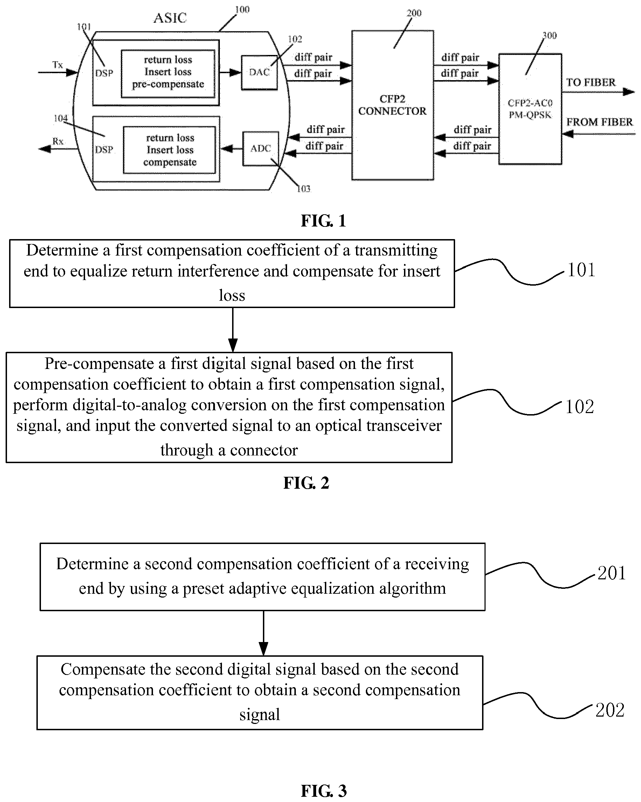

Embodiments of the present disclosure apply to an optical communication system as shown in FIG. 1, which includes: an ASIC (100) integrating digital signal processors DSPs (101, 104), a digital-to-analog converter DAC (102), and an analog-to-digital converter ADC (103); a connector (200); and an optical transceiver (300). The connector is configured to connect the DAC and the optical transceiver, as well as the ADC and the optical transceiver, the DAC is configured to convert a digital signal into an analog signal, the ADC is configured to convert an analog signal into a digital signal, and the optical transceiver is configured to implement photoelectric conversion, transmission and reception of optical signals.

Embodiment 1

An embodiment of the present disclosure provides a loss compensation method. In an embodiment of the present disclosure, damage includes return interference and insert loss. The method is applied to a scenario where the ASIC and the optical module are separated. As shown in FIG. 2, the loss compensation method according to an embodiment of the present disclosure includes steps 101-102.

At step 101, determine a first compensation coefficient of a transmitting end to equalize return interference and compensate for insert loss.

In an embodiment, the ASIC is connected to the optical transceiver through the connector, and return interference and insert loss at the transmitting end is pre-equalized and compensated by a filter, and a coefficient of the filter is the first compensation coefficient.

In an embodiment, manners of determining the first compensation coefficient of the transmitting end may include, but are not limited to, the following manners.

1) Determining a first compensation coefficient of the transmitting end by using a preset adaptive equalization algorithm;
2) Obtaining a plurality of sets of compensation coefficients by using a preset frequency response characteristic, and selecting a set of compensation coefficients which corresponds to a signal (output by the transmitter) with a best quality, as the first compensation coefficient; and
3) Determining the first compensation coefficient of the transmitting end by using a preset manner of inserting training sequence.

For the first manner, determining a first compensation coefficient of the transmitting end by using a preset adaptive equalization algorithm includes steps of: obtaining an estimated error e(n), e(n)=u(n)-y(n), wherein u(n) is, at time n, a signal after analog-to-digital conversion on the first digital signal and before being passed through the connector, and y(n) is the first output signal at time n, that is, a output signal of the filter at time n, an output signal of a simulation module, and is also an intermediate signal; obtaining a cost function J based on the estimated error e(n), $J=E\{[u(n)-y(n)]^2\}$, wherein E represents an expectation; obtaining

$$y(n) = \sum_{i=0}^{N-1} w(n)d(n-i)$$

, wherein w(n) is the first compensation coefficient at time n, and $w(n+1)=w(n)+\mu*d(n)**e(n)$, d(n) is, at time n, a signal after analog-to-digital conversion on the first digital signal and being passed through the connector; and determining a value of the first compensation coefficient based on the cost function J and the y(n).

For the second manner, specifically, the first compensation coefficient may be obtained by steps of: obtaining two or more sets of compensation coefficients by using a preset frequency response characteristic; and pre-compensating the first digital signal based on each set of compensation coefficients respectively, and determining a set of compensation coefficients which corresponds to a pre-compensated signal with a best quality as the first compensation coefficient. The "best quality" described herein can be characterized by a largest eye diagram, a best constellation, or a minimum bit error rate (BER).

For the third manner, determining the first compensation coefficient of the transmitting end by using a preset manner of inserting training sequence specifically includes steps of: determining a training sequence x(i), x(i+1), ..., x(i+P-1) having length P transmitted by the transmitting end, and a training data $x_1(i)$, $x_1(i+1),...,x_1(i+P-1)$ having length P received by an input end of the connector; performing a Fourier transform on the training data received by the input end of the connector to obtain $X_1(k)=FFT(x_1)$; determining a training data $x_2(i)$, $x_2(i+1),..., x_2(i+P-1)$ having length P received by the output end of the connector, and performing Fourier transform thereon to obtain $X_2(k)=FFT(x_2)$; and determining the transfer function as $H(k) = \dfrac{X_2(k)}{X_1(k)}$, and obtaining the first compensation coefficient h(n) = $IFFT(\dfrac{1}{H(k)})$ based on the transfer function, wherein h(n) represents a coefficient of a filter for compensation.

According to the above embodiment of the present disclosure, in practical applications, in order to obtain the best compensation effect, compensation can be performed simultaneously at the transmitting end and the receiving end, and the compensation coefficient of the receiving end can be set to be the same as that of the transmitting end, or may be determined in a same manner as the transmitting end.

At step 102, pre-compensate a first digital signal based on the first compensation coefficient to obtain a first compensation signal, performing digital-to-analog conversion on the first compensation signal, and inputting the converted signal to an optical transceiver through a connector.

Here, after the first compensation coefficient is determined, the first digital signal may be compensated based on the first compensation coefficient by using a preset adaptive equalization algorithm, and then digital-to-analog conversion may be performed on the first compensation signal, and the converted signal may be input to the optical transceiver through the connector.

Correspondingly, when a signal at the receiving end is compensated synchronously, the signal output from the optical transceiver, transmitted through the connector and converted by the analog-to-digital converter may be compensated based on the compensation coefficient of the receiving end.

Applying the foregoing embodiments of the present disclosure, the first compensation coefficient is determined at the transmitting end, and the first digital signal at the transmitter is pre-compensated based on the first compensation coefficient to obtain the first compensation signal, so that the pre-compensated signal is converted by the digital-to-analog converter and then input to the optical transceiver through the connector. At the same time, the second compensation coefficient may be determined at the receiving end, and then the second digital signal at the transmitter is compensated based on the second compensation coefficient to obtain the second compensation signal, the second digital signal is a signal obtained by performing analog-to-digital conversion on the signal outputted from the optical transceiver and transmitted through the connector. As such, performance loss caused by the return interference and the insert loss at the interfaces of the connector and the internal wirings of the optical module may be reduced by compensation, and affections by physical characteristics of an optical channel transmission line may be avoided since compensation for local loss are performed at the transmitting end and the receiving end, respectively.

Embodiment 2

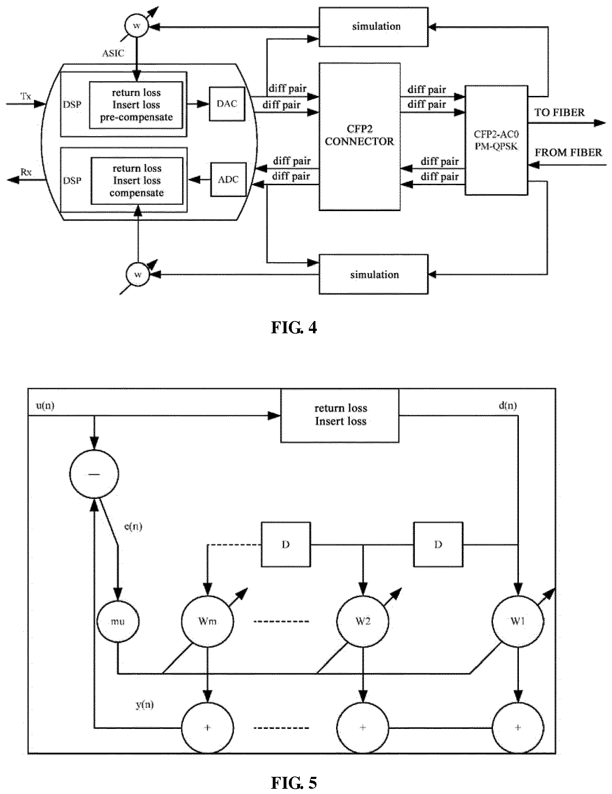

An embodiment of the present disclosure provides a loss compensation method, which is applied to a scenario where the ASIC and the optical module are separated. As shown in FIG. 3 and FIG. 4, the loss compensation method according to an embodiment of the present disclosure includes steps 201-202.

At step 201, determine a second compensation coefficient of a receiving end by using a preset adaptive equalization algorithm.

In this embodiment, the ASIC is connected to the optical transceiver through the connector; the return interference and the insert loss at the receiving end is pre-equalized and compensated by a filter, and a coefficient of the filter is the second compensation coefficient.

The adaptive equalization algorithm in an embodiment adopts a variant of a traditional least mean square error (LMS) algorithm. The LMS algorithm is an adaptive filtering algorithm which minimizes the mean square error.

The design criterion of the filter is to minimize the mean square error $J(n)$ between the actual output $y(n)$ of the filter and the expected response $d(n)$, i.e., the minimum mean square error criterion.

The so-called adaptive implementation means that the tap coefficients $W0, W1, ... WN-1$ of the M-order FIR filter can be automatically adjusted according to the estimation error $e(n)$, such that the cost function may be minimized.

The estimated error of the filter at time n is: $e(n)=d(n)-y(n)$; (1)

The cost function is: $J(n)=E\{|e(n)|^2\}=E\{[d(n)-y(n)]^2\}$, wherein E represents an expectation; (2)

The operation steps of the LMS algorithm are as following.

Initializing $w(n)(n=0,1,2...N-1)$ as any value, (generally as 0), and then performing the following steps for each sample:

calculating the output of the filter

$$y(n) = \sum_{i=0}^{N-1} w(n)u(n-i) \; ; (3)$$

calculating the estimated error $e(n)=d(n)-y(n)$;
updating N filter weight coefficients $w(n+1)=w(n)+\mu*d(n)^{**}e(n)$; (4)
looping back to formula (3).

In the above equations, $w(n)$ is the tap-weight vector, $e(n)$ is the estimation error of the filter at time n, $\mu$ is the step factor, $d(n)$ is a desired signal, and $y(n)$ is a actual output of the filter, and $x(n)$ is a input signal.

The effect of resulting filter is equivalent to the effect of the return loss and the insert loss, and the compensation filter may be obtained by an inverse operation.

The adaptive equalization algorithm applied in an embodiment is shown in FIG. 5, wherein $u(n)$ is the signal before being passed through the connector, $d(n)$ is the signal after being passed through the connector, and $y(n)$ is the first output signal at time n, that is, an output signal of the filter at time n, an output signal of a simulation module, and is also an intermediate signal. Wm is the filter coefficient, m represents the order of the filter, and the value of m can be set as required. In practical applications, a training sequence can be sent at the transmitting end, and the data before the connector and the data after the connector are simultaneously acquired by an oscilloscope, and served as $u(n)$ and $d(n)$ of the adaptive equalization algorithm applied in the embodiment after correlation alignment.

The step 201 specifically includes steps of: obtaining an estimated error $e(n)$, $e(n)=u(n)-y(n)$, wherein $u(n)$ is, at time n, a signal after analog-to-digital conversion on the first digital signal and before being passed through the connector, and $u(n)$ is a expected response here; obtaining a cost function J based on the estimated error e(n), J=E{[u(n)-y(n)]^2}, wherein E represents an expectation; obtaining

$$y(n) = \sum_{i=0}^{N-1} w(n)d(n-i)$$

, wherein w(n) is the first compensation coefficient at time n, and w(n+1)=w(n)+μ*d(n)**e(n), d(n) is, at time n, a signal after analog-to-digital conversion on the first digital signal and being passed through the connector; and determining a value of the second compensation coefficient based on the cost function J and the y(n).

Compared with the traditional LMS algorithm, the above adaptive equalization algorithm can achieve a same compensation effect without a step of calculating reciprocal of the filter coefficient, which reduces the resource occupation in hardware implementation.

The calculation steps are consistent with that of the conventional LMS algorithm. The obtained filter coefficient when the value of cost function is the smallest (approaching 0) is the first compensation coefficient.

At step 202, compensate the second digital signal based on the second compensation coefficient to obtain a second compensation signal.

Here, the second digital signal is a signal obtained by performing analog-to-digital conversion on the signal outputted from the optical transceiver and transmitted through the connector.

In an embodiment of the present disclosure, compensation can be performed simultaneously at the transmitting end and the receiving end, and the second compensation coefficient of the receiving end may be the same as or different from the first compensation coefficient of the transmitting end.

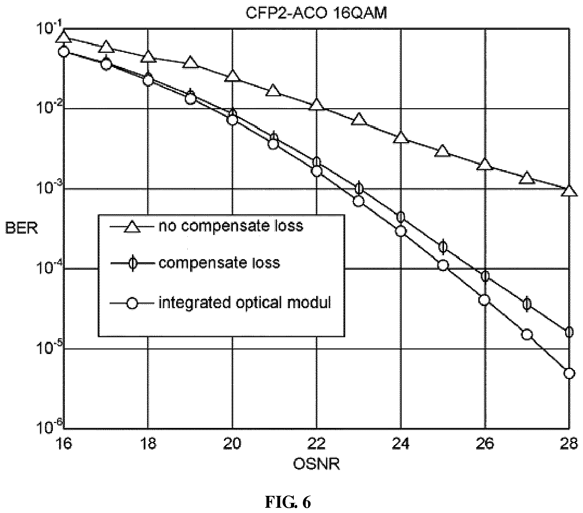

Applying the foregoing embodiments of the present disclosure, the compensation coefficients of the transmitting end and the receiving end are determined, and then the return interference and the insert loss at the transmitting end and the receiving end are respectively compensated based on the determined compensation coefficients. As such, the performance loss caused by the return interference and the insert loss generated at the interfaces of the connector and the internal wirings of the optical module, and affections by physical characteristics of an optical channel transmission line may be avoided since compensation for local loss are separately performed at the transmitting end and the receiving end. As shown in Figure 6, after equalization and compensation, the system performance is greatly improved compared to that without equalization and compensation, and is comparable to the performance of the optical module system integrated with the ASIC and the optical transceiver; further, the size and power consumption are reduced, flexibility of the optical module is improved, and the cost of the coherent device is reduced compared to an integrated optical module, which is suitable for popularization.

Embodiment 3

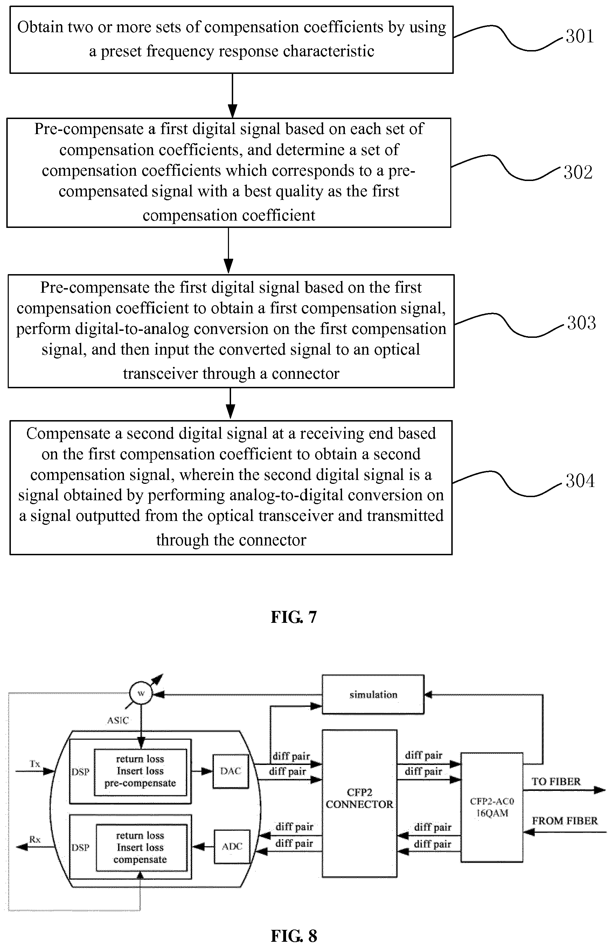

An embodiment of the present disclosure provides a loss compensation method, which is applied to a scenario where the ASIC and the optical module are separated. As shown in FIG. 7, the loss compensation method according to an embodiment of the present disclosure includes steps 301-304.

At step 301, obtain two or more sets of compensation coefficients by using a preset frequency response characteristic.

Here, in a practical application, by utilizing a preset frequency response characteristic, a plurality of sets of compensation coefficients can be obtained by using signals before and after being passed through the connector, and Fourier transform and inverse Fourier transform. The plurality of sets of compensation coefficients are not all optimal and need to be further selected.

At step 302, pre-compensate the first digital signal based on each set of compensation coefficients, and determine a set of compensation coefficients which corresponds to a pre-compensated signal with a best quality as the first compensation coefficient.

In practical applications, the first digital signal is pre-compensated based on the plurality of obtained sets of compensation coefficients by using a preset compensation algorithm, and a signal correspond to a largest eye diagram, a best constellation diagram, or a smallest bit error rate is determined as a signal with the best quality, and the compensation coefficient corresponds to the signal with the best quality is determined as the first compensation coefficient.

At step 303, pre-compensate the first digital signal based on the first compensation coefficient to obtain a first compensation signal, perform digital-to-analog conversion on the first compensation signal, and then input the converted signal to the optical transceiver through the connector.

Here, after the first compensation coefficient is determined, the first digital signal may be compensated based on the first compensation coefficient by using a preset adaptive equalization algorithm, and then digital-to-analog conversion may be performed on the first compensation signal, and the converted signal may be input to an optical transceiver through the connector.

At step 304, compensate a second digital signal at the receiving end based on the first compensation coefficient to obtain a second compensation signal, wherein the second digital signal is a signal obtained by performing analog-to-digital conversion on a signal outputted from the optical transceiver and transmitted through the connector.

In this embodiment, the compensation coefficient of the receiving end is the same as that of the transmitting end, as shown in the process of FIG. 8.

Embodiment 4

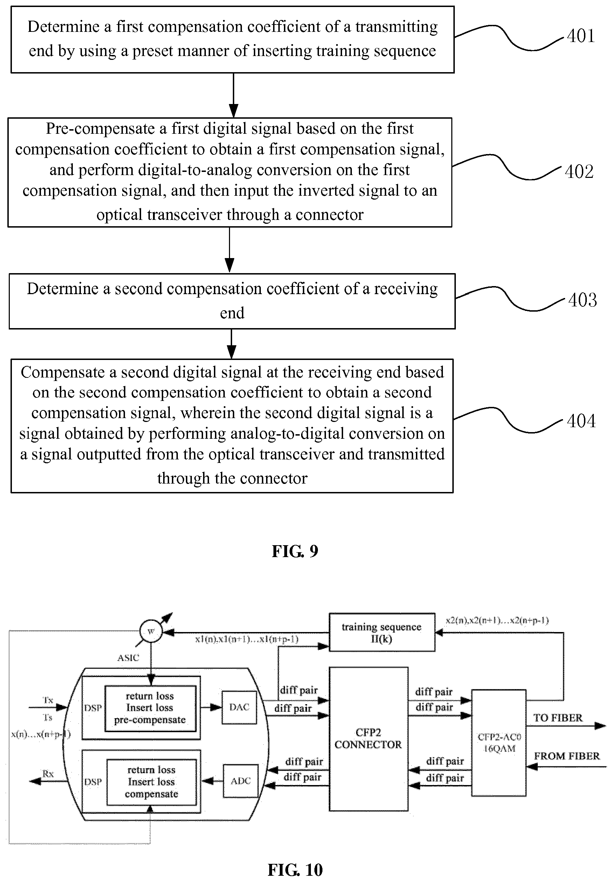

An embodiment of the present disclosure provides a loss compensation method, which is applied to a scenario where the ASIC and the optical module are separated. As shown in FIG. 9 and FIG. 10, the loss compensation method according to an embodiment of the present disclosure includes steps 401-404.

At step 401, determine a first compensation coefficient of the transmitting end by using a preset manner of inserting training sequence.

In practical applications, the step 401 specifically includes: determining the first compensation coefficient of the transmitting end by using a preset manner of inserting training sequence, which includes: determining a training sequence $x(i)$, $x(i+1)$, ..., $x(i+P-1)$ having length P transmitted by the transmitting end, and a training data $x_1(i)$, $x_1(i+1)$,...,$x_1(i+P-1)$ having length P received by an input end of the connector, wherein i is an integer; performing a Fourier transform on the training data received by the input end of the connector to obtain $X_1(k)=FFT(x_1)$; determining a training data $x_2(i)$, $x_2(i+1)$,..., $x_2(i+P-1)$ having length P received by the output end of the connector, and performing Fourier transform thereon to obtain $X_2(k)=FFT(x_2)$; and determining the transfer function as $$H(k) = \frac{X_2(k)}{X_1(k)}$$ , and obtaining the first compensation coefficient $$\mathrm{h}(n) = \mathrm{IFFT}(\frac{1}{H(k)})$$ based on the transfer function, wherein h(n) represents a coefficient of a filter for compensation.

At step 402, pre-compensate the first digital signal based on the first compensation coefficient to obtain a first compensation signal, and perform digital-to-analog conversion on the first compensation signal, and then input the inverted signal to the optical transceiver through the connector.

Here, after the first compensation coefficient is determined, the first digital signal may be compensated based on the first compensation coefficient by using a preset adaptive equalization algorithm, and then digital-to-analog conversion may be performed on the first compensation signal, and the converted signal may be input to an optical transceiver through the connector.

At step 403, determine a second compensation coefficient of the receiving end.

In an embodiment, the second compensation coefficient of the receiving end is different from the first compensation coefficient. The second compensation coefficient may be determined by using one of the three manners for determining the compensation coefficient in Embodiment 1, such as, the manner of inserting the training sequence as described in this embodiment.

At step 404, compensate a second digital signal at the receiving end based on the second compensation coefficient to obtain a second compensation signal, wherein the second digital signal is a signal obtained by performing analog-to-digital conversion on a signal outputted from the optical transceiver and transmitted through the connector.

Embodiment 5

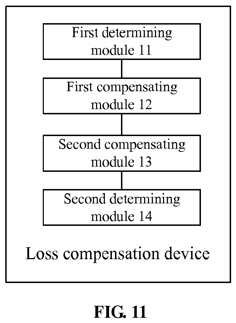

An embodiment provides a loss compensation device, which is applied to a scenario where the ASIC and the optical module are separated. As shown in FIG. 11, the device includes: a first determining module 11 and a first compensating module 12.

The first determining module 11 is configured to determine a first compensation coefficient of a transmitting end to equalize return interference and compensate for insert loss.

The first compensating module 12 is configured to pre-compensate a first digital signal based on the first compensation coefficient to obtain a first compensation signal, perform digital-to-analog conversion on the first compensation signal, and input the converted signal to an optical transceiver through a connector.

In an embodiment, the ASIC is connected to the optical transceiver through the connector.

The first determining module 11 is further configured to determine a first compensation coefficient of the transmitting end, by using a preset adaptive equalization algorithm. The first determining module 11 is further configured to: obtain an estimated error e(n), e(n)=u(n)-y(n), wherein u(n) is, at time n, a signal after analog-to-digital conversion on the first digital signal and before being passed through the connector, and y(n) is the first output signal at time n; obtain a cost function J based on the estimated error e(n), J=E{[u(n)-y(n)]^2}, wherein E represents an expectation; obtain $$y(n) = \sum_{i=0}^{N-1} w(n)d(n-i)$$ , wherein w(n) is the first compensation coefficient at time n, and w(n+1)=w(n)+μ*d(n)**e(n), d(n) is, at time n, a signal after analog-to-digital conversion on the first digital signal and being passed through the connector; and determine a value of the first compensation coefficient based on the cost function J and the y(n).

In an embodiment, the ASIC is connected to the optical transceiver through the connector.

The first determining module 11 is further configured to obtain two or more sets of compensation coefficients by using a preset frequency response characteristic; and pre-compensate the first digital signal based on each set of compensation coefficients respectively, and determine a set of compensation coefficients which corresponds to a pre-compensated signal with a best quality as the first compensation coefficient.

In an embodiment, the ASIC is connected to the optical transceiver through the connector.

The first determining module 11 is further configured to determine the first compensation coefficient of the transmitting end, by using a preset insertion training sequence. The first determining module 11 is further configured to: determine a training sequence x(i), x(i+1), ..., x(i+P-1) having length P transmitted by the transmitting end, and a training data $x_1(i)$, $x_1(i+1)$,...,$x_1(i+P-1)$ having length P received by an input end of the connector; perform a Fourier transform on the training data received by the input end of the connector to obtain $X_1(k)=FFT(x_1)$; determine a training data $x_2(i)$, $x_2(i+1)$,..., $x_2(i+P-1)$ having length P received by the output end of the connector, and perform Fourier transform thereon to obtain $X_2(k)=FFT(x_2)$; and determine the transfer function as

$$H(k) = \frac{X_2(k)}{X_1(k)}$$

, and obtain the first compensation coefficient

$$h(n) = IFFT(\frac{1}{H(k)})$$

based on the transfer function, wherein h(n) represents a coefficient of a filter for compensation.

In an embodiment, the device further includes a second compensating module 13 configured to compensate a second digital signal at a receiving end based on the first compensation coefficient to obtain a second compensation signal, wherein the second digital signal is a signal obtained by performing analog-to-digital conversion on a signal outputted from the optical transceiver and transmitted through the connector.

In an embodiment, the device further includes a second compensating module 13 and a second determining module 14, wherein the second determining module 13 is configured to determine a second compensation coefficient of a receiving end to equalize return interference and compensate for insert loss, the second compensating module 14 is configured to compensate a second digital signal at the receiving end based on the second compensation coefficient to obtain a second compensation signal, and wherein the second digital signal is a signal obtained by performing analog-to-digital conversion on a signal outputted from the optical transceiver and transmitted through the connector.

In embodiments of the present disclosure, the first determining module 11, the first compensating module 12, the second determining module 13, and the second compensating module 14 in the loss compensation device may be implemented by a Central Processing Unit (CPU), or a Digital Signal Processor), (DSP), or a Field Programmable Gate Array (FPGA), or a Integrated Circuit (ASIC) in a terminal or a device.

It should be pointed out that, the description of the loss compensation device is similar to the above description of the loss compensation method, and the beneficial effects of the loss compensation device is same as that of the loss compensation method and will not be described here again. For technical details not disclosed in the device embodiment of the present disclosure, please refer to the description of the method embodiments of the present disclosure.

It can be understood by those skilled in the art that, all or part of the steps for implementing the above method embodiments may be completed by hardware related to program instructions. The foregoing program may be stored in a computer readable storage medium, and causes implementation of the steps in the method embodiments when executed. The foregoing storage medium includes: a mobile storage device, a random access memory (RAM), a read-only memory (ROM), a magnetic disk, or an optical disk, or any medium that can store program code.

Alternatively, the above-described integrated unit of the present disclosure may be stored in a computer readable storage medium if implemented in the form of a software function module and sold or served as a standalone product. Based on such understanding, the essential part, or a part making outstanding contributions over existing art, of the technical solution of the embodiments of the present disclosure may be embodied in the form of a software product, which is stored in a storage medium and includes a plurality of instructions for causing a computer device (which may be a personal computer, a server, or a network device, etc.) to perform all or part of the methods described in various embodiments of the present disclosure. The foregoing storage medium includes: a mobile storage device, a RAM, a ROM, a magnetic disk, or an optical disk, or any media that can store program codes.

The above description is merely exemplary embodiments of the present disclosure, but the scope of the present disclosure is not limited thereto, and variations or substitutions that can easily thought of within the technical scope of the present disclosure by any person skilled in the art should be covered by the scope of the present disclosure. Therefore, the scope of the disclosure should be defined by the scope of the appended claims.

**Industrial applicability**

As described above, the loss compensation method and device provided by embodiments of this disclosure have the following benefits: performance loss caused by the return interference and the insert loss at the interfaces of the connector and the internal wirings of the optical module may be reduced by pre-compensating the first digital signal at the transmitting end and compensating the second digital signal at the receiving end, and affections by physical characteristics of an optical channel transmission line may be avoided since compensation for local loss are performed at the transmitting end and the receiving end, respectively.

## Claims

1. A loss compensation method, applied to a scenario where an Application Specific Integrated Circuit (ASIC) and an optical module comprising an optical transceiver are separated, **characterized in that** the loss compensation method comprises steps of:

   determining a first compensation coefficient of a transmitting end to equalize return interference and compensate for insert loss (101), wherein the return interference and insert loss occurs at interfaces of a connector and internal wirings of the optical module; and
   pre-compensating a first digital signal at the transmitting end based on the first compensation coefficient to obtain a first compensation signal, performing digital-to-analog conversion on the first compensation signal, and inputting the converted signal to the optical transceiver through the connector (102).

2. The method of claim 1, further comprising steps of:

   determining a second compensation coefficient of a receiving end to equalize return interference and compensate for insert loss; and
   compensating a second digital signal at the receiving end based on the second compensation coefficient to obtain a second compensation signal,
   wherein the second digital signal is a signal obtained by performing analog-to-digital conversion on a signal outputted from the optical transceiver and transmitted through the connector.

3. The method of claim 1, further comprising steps of:

   compensating a second digital signal at a receiving end based on the first compensation coefficient to obtain a second compensation signal,
   wherein the second digital signal is a signal obtained by performing analog-to-digital conversion on a signal outputted from the optical transceiver and transmitted through the connector.

4. The method of claim 1, wherein the ASIC is connected to the optical transceiver through the connector, and the step of determining the first compensation coefficient of the transmitting end to equalize return interference and compensate for insert loss comprises:
   determining the first compensation coefficient of the transmitting end to equalize the return interference and compensate the insert loss by using a preset adaptive equalization algorithm, comprising steps of:

   obtaining an estimated error e(n), e(n)=u(n)-y(n), wherein u(n) is, at time n, a signal after analog-to-digital conversion on the first digital signal and before being passed through the connector, and y(n) is the first output signal at time n;
   obtaining a cost function J based on the estimated error e(n), J=E{[u(n)-y(n)]^2}, wherein E represents an expectation;
   obtaining $y(n) = \sum_{i=0}^{N-1} w(n)d(n-i)$, wherein w(n) is the first compensation coefficient at time n, and w(n+1)=w(n)+μ*d(n)**e(n), d(n) is, at time n, a signal after analog-to-digital conversion on the first digital signal and being passed through the connector, μ is a step factor; and
   determining a value of the first compensation coefficient based on the cost function J and the y(n).

5. The method of claim 1, wherein the ASIC is connected to the optical transceiver through the connector, and the step of determining the first compensation coefficient of the transmitting end to equalize return interference and compensate for insert loss comprises steps of:

   obtaining two or more sets of compensation coefficients by using a preset frequency response characteristic (301); and
   pre-compensating the first digital signal based on each set of compensation coefficients respectively, and determining a set of compensation coefficients which corresponds to a pre-compensated signal with a best quality as the first compensation coefficient (302).

6. The method of claim 1, wherein the ASIC is connected to the optical transceiver through the connector, and the step of determining the first compensation coefficient of the transmitting end to equalize return interference and compensate for insert loss comprises:
   determining the first compensation coefficient of the transmitting end by using a preset manner of inserting training sequence (401), comprising steps of:

   determining a training sequence x(i), x(i+1), ..., x(i+P-1) having length P transmitted by the transmitting end, and a training data $x_1(i)$, $x_1(i+1)$,...,$x_1(i+P-1)$ having length P received by an input end of the connector;
   performing a Fourier transform on the training data received by the input end of the connector to obtain $X_1(k)=FFT(x_1)$;
   determining a training data $x_2(i)$, $x_2(i+1)$,..., $x_2(i+P-1)$ having length P received by the output end of the connector, and performing Fourier transform thereon to obtain $X_2(k)=FFT(x_2)$; and determining the transfer function as

$$H(k) = \frac{X_2(k)}{X_1(k)}$$

, and obtaining the first compensation coefficient

$$h(n) = IFFT(\frac{1}{H(k)})$$

based on the transfer function, wherein h(n) represents a coefficient of a filter for compensation.

7. A loss compensation device, applied to a scenario where an Application Specific Integrated Circuit (ASIC) and an optical module comprising an optical transceiver are separated, **characterized in that** the loss compensation device comprises: a first determining module (11) and a first compensating module (12), wherein

the first determining module (11) is configured to determine a first compensation coefficient of a transmitting end to equalize return interference and compensate for insert loss, wherein the return interference and insert loss occurs at interfaces of a connector and internal wirings of the optical module; and
the first compensating module (12) is configured to pre-compensate a first digital signal at the transmitting end based on the first compensation coefficient to obtain a first compensation signal, perform digital-to-analog conversion on the first compensation signal, and input the converted signal to the optical transceiver through the connector.

8. The device according to claim 7, wherein the device further comprises a second compensating module (13) and a second determining module (14), wherein

the second determining module (13) is configured to determine a second compensation coefficient of a receiving end to equalize return interference and compensate for insert loss; and
the second compensating module (14) is configured to compensate a second digital signal at the receiving end based on the second compensation coefficient to obtain a second compensation signal,
wherein the second digital signal is a signal obtained by performing analog-to-digital conversion on a signal outputted from the optical transceiver and transmitted through the connector.

9. The device according to claim 7, wherein the device further comprises a second compensating module (14) configured to compensate a second digital signal at a receiving end based on the first compensation coefficient to obtain a second compensation signal,
wherein the second digital signal is a signal obtained by performing analog-to-digital conversion on a signal outputted from the optical transceiver and transmitted through the connector.

10. The device of claim 7, wherein the ASIC is connected to the optical transceiver through the connector; the first determining module (11) is further configured to determine the first compensation coefficient by using a preset adaptive equalization algorithm, and the first determining module (11) is further configured to:

obtain an estimated error e(n), e(n)=u(n)-y(n), wherein u(n) is, at time n, a signal after analog-to-digital conversion on the first digital signal and before being passed through the connector, and y(n) is the first output signal at time n;
obtain a cost function J based on the estimated error e(n), J=E{[u(n)-y(n)]^2} wherein E represents an expectation;
obtain

$$y(n) = \sum_{i=0}^{N-1} w(n)d(n-i)$$

, wherein w(n) is the first compensation coefficient at time n, and w(n+1)=w(n)+μ*d(n)**e(n), d(n) is, at time n, a signal after analog-to-digital conversion on the first digital signal and being passed through the connector, μ is a step factor; and
determine a value of the first compensation coefficient based on the cost function J and the y(n).

11. The device of claim 7, wherein the ASIC is connected to the optical transceiver through the connector;

the first determining module (11) is further configured to obtain two or more sets of compensation coefficients by using a preset frequency response characteristic; and
pre-compensate the first digital signal based on each set of compensation coefficients respectively, and determine a set of compensation coefficients which corresponds to a pre-compensated signal with a best quality as the first compensation coefficient.

12. The device of claim 7, wherein the ASIC is connected to the optical transceiver through the connector, the first determining module (11) is further configured to determine the first compensation coefficient of the transmitting end by using a preset manner of inserting training sequence, and the first determining module (11) is further configured to:

determine a training sequence x(i), x(i+1), ..., x(i+P-1) having length P transmitted by the transmitting end, and a training data $x_1(i)$, $x_1(i+1),...,x_1(i+P-1)$ having length P received by an input end of the connector;

perform a Fourier transform on the training data received by the input end of the connector to obtain $X_1(k)=FFT(x_1)$;

determine a training data $x_2(i)$, $x_2(i+1),..., x_2(i+P-1)$ having length P received by the output end of the connector, and perform Fourier transform thereon to obtain $X_2(k)=FFT(x_2)$; and

determine the transfer function as

$$H(k) = \frac{X_2(k)}{X_1(k)}$$ , and obtain the first compensa-

tion coefficient $$h(n) = IFFT(\frac{1}{H(k)})$$ based on the transfer function, wherein h(n) represents a coefficient of a filter for compensation.

13. A storage medium comprising a program stored thereon, wherein the program is executed to perform the method of any of claims 1 to 6.

**Patentansprüche**

1. Ein Verlustkompensationsverfahren, das in einem Fall angewendet wird, in dem eine anwendungsspezifische integrierte Schaltung (ASIC) und ein optisches Modul, das einen optischen Sendeempfänger (Transceiver) umfasst, getrennt sind, **dadurch gekennzeichnet, dass** das Verlustkompensationsverfahren folgende Schritte umfasst:

Bestimmen eines ersten Kompensationskoeffizienten eines Sendeendes, um Rückstörung (return interference) auszugleichen und Einfügedämpfung (101) zu kompensieren, wobei die Rückstörung und Einfügedämpfung an Schnittstellen eines Verbinders und der internen Verdrahtung des optischen Moduls auftreten; und
Vorkompensieren eines ersten digitalen Signals am Sendeende basierend auf dem ersten Kompensationskoeffizienten, um ein erstes Kompensationssignal zu erhalten, Aussetzen des ersten Kompensationssignals einer Digital-Analog-Umwandlung und Eingeben des umgewandelten Signals in den optischen Sendeempfänger durch den Verbinder ( 102).

2. Verfahren nach Anspruch 1, ferner umfassend die folgenden Schritte:

Bestimmen eines zweiten Kompensationskoeffizienten eines Empfangsendes, um Rückstörung auszugleichen und Einfügedämpfung zu kompensieren; und
Kompensieren eines zweiten digitalen Signals am Empfangsende basierend auf dem zweiten Kompensationskoeffizienten, um ein zweites Kompensationssignal zu erhalten,
wobei das zweite digitale Signal ein Signal ist, das durch Aussetzen eines von dem optischen Sendeempfänger ausgegebenen und durch den Verbinder übertragenen Signal einer Analog-Digital-Umwandlung erhalten wird.

3. Verfahren nach Anspruch 1, ferner umfassend die folgenden Schritte:

Kompensieren eines zweiten digitalen Signals an einem Empfangsende basierend auf dem ersten Kompensationskoeffizienten, um ein zweites Kompensationssignal zu erhalten,
wobei das zweite digitale Signal ein Signal ist, durch Aussetzen eines von dem optischen Sendeempfänger ausgegebenen und durch den Verbinder übertragenen Signal einer Analog-Digital-Umwandlung erhalten wird.

4. Verfahren nach Anspruch 1, wobei die ASIC mit dem optischen Sendeempfänger durch den Verbinder verbunden ist und der Schritt des Bestimmens des ersten Kompensationskoeffizienten des Sendeendes zum Entzerren der Rückstörung und zum Kompensieren der Einfügedämpfung umfasst:
Bestimmen des ersten Kompensationskoeffizienten des Sendeendes zum Ausgleichen der Rückstörung und zum Kompensieren des Einfügedämpfungs unter Verwendung eines voreingestellten adaptiven Ausgleichungsalgorithmus, umfassend die folgenden Schritte:

Erhalten eines geschätzten Fehlers e(n), e(n) = u(n) - y(n), wobei u(n) zum Zeitpunkt n ein Signal nach der Analog-Digital-Umandlung des ersten digitalen Signals und vor der Durchführung durch den Verbinder ist, und y(n) das erste Ausgangssignal zum Zeitpunkt n ist;
Erhalten einer Kostenfunktion J basierend auf dem geschätzten Fehler e(n), $J = E\{[u(n) - y(n)]^2\}$, wobei E eine Erwartung darstellt;

Erhalten von $$y(n) = \sum_{i=0}^{N-1} w(n)d(n-i)$$ , wobei w(n) der erste Kompensationskoeffizient zum Zeitpunkt n ist und $w(n+1)=w(n)+\mu*d(n)^{*}*e(n)$, d(n) ist, zum Zeitpunkt n ein Signal nach der Analog-Digital-Umwandlung des ersten digitalen Signals und der Durchführung durch durch den Verbinder ist, $\mu$ ein Schrittfaktor ist; und

Bestimmen eines Wertes des ersten Kompensationskoeffizienten basierend auf der Kostenfunktion J und y(n).

5. Verfahren nach Anspruch 1, wobei die ASIC mit dem optischen Sendeempfänger über den Verbinder verbunden ist und der Schritt des Bestimmens des ersten Kompensationskoeffizienten des Sendeendes zum Ausgleichen der Rückstörung und zum Kompensieren der Einfügedämpfung folgende Schritte umfasst:

Erhalten von zwei oder mehr Sätzen von Kompensationskoeffizienten unter Verwendung einer voreingestellten Frequenzgangcharakteristik (301); und

Vorkompensieren des ersten digitalen Signals jeweils basierend auf jedem Satz von Kompensationskoeffizienten und Bestimmen eines Satzes von Kompensationskoeffizienten als den ersten Kompensationskoeffizienten (302), der einem vorkompensierten Signal mit einer besten Qualität entspricht.

6. Verfahren nach Anspruch 1, wobei die ASIC mit dem optischen Sendeempfänger über den Verbinder verbunden ist und der Schritt des Bestimmens des ersten Kompensationskoeffizienten des Sendeendes zum Ausgleichen der Rückstörung und zum Kompensieren der Einfügedämpfung umfasst:

Bestimmen des ersten Kompensationskoeffizienten des Sendeendes unter Verwendung einer voreingestellten Art und Weise des Einfügens einer Trainingssequenz (401), umfassend die folgenden Schritte:

Bestimmen einer Trainingssequenz $x(i)$, $x(i+1)$, ..., $x(i+P-1)$ mit einer Länge P, die von der Sendeseite übertragen wird, und einer Trainingsdatei $x1(i)$, $x1(i+1)$,...,$x1(i+P-1)$ mit einer Länge P, die von einem Eingangsende des Verbinders empfangen wird;

Aussetzen der Trainingsdatei einer Fourier-Transformation, die vom Eingangsende des Verbinders empfangen wird, um $X1(k) = FFT(x1)$ zu erhalten;

Bestimmen von Trainingsdatei $x2(i)$, $x2(i+1)$, ..., $x_2(i+P-1)$ mit einer Länge P, die von dem Ausgangsende des Verbinders empfangen wird, und Aussetzen derselben einer Fourier-Transformation, um $X2(k) = FFT(x2)$ zu erhalten; und

Bestimmen der Übertragungsfunktion als
$$H(k) = \frac{X_2(k)}{X_1(k)}$$
, und Erhalten des ersten Kompensationskoeffizienten

$$h(n) = IFFT\left(\frac{1}{H(k)}\right)$$
basierend auf der Übertragungsfunktion, wobei h(n) einen Koeffizienten eines Filters zur Kompensation darstellt.

7. Verlustkompensationsvorrichtung, die in einem Fall verwendet wird, in dem eine anwendungsspezifische integrierte Schaltung (ASIC) und ein optisches Modul, das einen optischen Sendeempfänger (Transceiver) umfasst, getrennt sind, **dadurch gekennzeichnet, dass** die Verlustkompensationsvorrichtung umfasst: ein erstes Bestimmungsmodul (11) und ein erstes Kompensationsmodul (12), wobei

das erste Bestimmungsmodul (11) dazu konfiguriert ist, um einen ersten Kompensationskoeffizienten eines Sendeendes zu bestimmen, um Rückstörungen auszugleichen und Einfügedämpfung zu kompensieren, wobei die Rückstörung und Einfügedämpfung an Schnittstellen eines Verbinders und internen Verdrahtung des optischen Moduls auftreten; und

das erste Kompensationsmodul (12) dazu konfiguriert ist, um das ersten digitale Signals am Sendeende basierend auf dem ersten Kompensationskoeffizienten zum Erhalten eines ersten Kompensationssignals vorzukompensieren, das erste Kompensationssignal einer Digital-Analog-Umwandlung auszusetzen und das umgewandelte Signal in den optischen Sendeempfänger durch den Verbinder einzugeben.

8. Vorrichtung nach Anspruch 7, wobei die Vorrichtung weiter ein zweites Kompensationsmodul (13) und ein zweites Bestimmungsmodul (14) umfasst, wobei

das zweite Bestimmungsmodul (13) dazu konfiguriert ist, einen zweiten Kompensationskoeffizienten eines Empfangsendes zu bestimmen, um Rückstörung auszugleichen und Einfügedämpfung zu kompensieren; und

das zweite Kompensationsmodul (14) dazu konfiguriert ist, ein zweites digitales Signal am Empfangsende basierend auf dem zweiten Kompensationskoeffizienten zu kompensieren, um ein zweites Kompensationssignal zu erhalten, wobei das zweite digitale Signal ein Signal ist, das durch Aussetzen eines von dem optischen Sendeempfänger ausgegebenen und durch den Verbinder übertragenen Signal einer Analog-Digital-Umwandlung erhalten wird.

9. Vorrichtung nach Anspruch 7, wobei die Vorrichtung ferner ein zweites Kompensationsmodul (14) umfasst, das dazu konfiguriert ist, ein zweites digitales Signal an einem Empfangsende basierend auf dem ersten Kompensationskoeffizienten zu kompensieren, um ein zweites Kompensationssignal zu erhalten.

wobei das zweite digitale Signal ein Signal ist, das durch Aussetzen eines von dem optischen Sendeempfänger ausgegebenen und durch den Verbinder übertragenen Signal einer Analog-Digital-Umwandlung erhalten wird.

10. Vorrichtung nach Anspruch 7, wobei die ASIC mit dem optischen Sendeempfänger über den Verbinder verbunden ist;

das erste Bestimmungsmodul (11) ferner dazu konfiguriert ist, den ersten Kompensationskoeffizienten unter Verwendung eines voreingestellten adaptiven Ausgleichungsalgorithmus zu bestimmen, und das erste Bestimmungsmodul (11) ferner konfiguriert ist zum:

Erhalten eines geschätzten Fehlers e(n), e(n) = u(n) - y(n), wobei u(n) zum Zeitpunkt n ein Signal nach der Analog-Digital-Umandlung des ersten digitalen Signals und vor der Durchführung durch den Verbinder ist, und y(n) das erste Ausgangssignal zum Zeitpunkt n ist;
Erhalten einer Kostenfunktion J basierend auf dem geschätzten Fehler e(n), J = E{[u(n) -y(n)] ^2}, wobei E eine Erwartung darstellt;

$$y(n) = \sum_{i=0}^{N-1} w(n)d(n-i)$$

Erhalten von , wobei w(n) der erste Kompensationskoeffizient zum Zeitpunkt n ist und w(n+1)=w(n)+$\mu$*d(n)**e(n), d(n) ist, zum Zeitpunkt n ein Signal nach der Analog-Digital-Umwandlung des ersten digitalen Signals und der Durchführung durch durch den Verbinder ist, $\mu$ ein Schrittfaktor ist; und
Bestimmen eines Wertes des ersten Kompensationskoeffizienten basierend auf der Kostenfunktion J und y(n).

11. Vorrichtung nach Anspruch 7, wobei die ASIC mit dem optischen Sendeempfängerüber den Verbinder verbunden ist;

das erste Bestimmungsmodul (11) ferner dazu konfiguriert ist, zwei oder mehr Sätze von Kompensationskoeffizienten unter Verwendung einer voreingestellten Frequenzgangcharakteristik zu erhalten; und
das erste digitalen Signal jeweils basierend auf jedem Satz von Kompensationskoeffizienten vorzukompensieren und einen Satz von Kompensationskoeffizienten als den ersten Kompensationskoeffizienten zu bestimmen, der einem vorkompensierten Signal mit einer besten Qualität entspricht.

12. Vorrichtung nach Anspruch 7, wobei die ASIC mit dem optischen Sendeempfänger über den Verbinder verbunden ist,

das erste Bestimmungsmodul (11) ferner dazu konfiguriert ist, den ersten Kompensationskoeffizienten des Sendeendes unter Verwendung einer voreingestellten Art und Weise des Einfügens einer Trainingssequenz zu bestimmen, und das erste Bestimmungsmodul (11) ferner konfiguriert ist zum:

Bestimmen einer Trainingssequenz x(i), x(i+1), ..., x(i+P-1) mit einer Länge P, die von der Sendeseite übertragen wird, und einer Trainingsdatei x1(i), x1(i+1 ),...,x1(i+P-1) mit einer Länge P, die von einem Eingangsende des Verbinders empfangen wird;
Aussetzen der Trainingsdatei einer Fourier-Transformation, die vom Eingangsende des Verbinders empfangen wird, um X1(k) = FFT(x1) zu erhalten;
Bestimmen von Trainingsdatei x2(i), x2(i+1), ..., $x_2$(i+P-1) mit einer Länge P, die von dem Ausgangsende des Verbinders empfangen wird, und Aussetzen derselben einer Fourier-Transformation, um X2(k) =FFT(x2) zu erhalten; und
Bestimmen der Übertragungsfunktion als

$$H(k) = \frac{X_2(k)}{X_1(k)}$$

, und Erhalten des ersten Kompensationskoeffizienten

$$h(n) = \mathrm{IFFT}\left(\frac{1}{H(k)}\right)$$

basierend auf der Übertragungsfunktion, wobei h(n) einen Koeffizienten eines Filters zur Kompensation darstellt.

13. Speichermedium, das ein darauf gespeichertes Programm umfasst, wobei das Programm ausgeführt wird, um das Verfahren nach einem der Ansprüche 1 bis 6 durchzuführen.

**Revendications**

1. Procédé de compensation de perte, appliqué à un scénario où un circuit intégré à application spécifique (ASIC) et un module optique comprenant un émetteur-récepteur optique sont séparés, **caractérisé en ce que** le procédé de compensation de perte comprend les étapes ci-dessous consistant à :

déterminer un premier coefficient de compensation d'une extrémité de transmission pour égaliser un brouillage de retour et compenser une perte d'insertion (101), dans lequel le brouillage de retour et la perte d'insertion se produisent au niveau des interfaces d'un connecteur et de câblages internes du module optique ;

et

pré-compenser un premier signal numérique au niveau de l'extrémité de transmission, sur la base du premier coefficient de compensation, pour obtenir un premier signal de compensation, mettre en œuvre une conversion numérique-analogique sur le premier signal de compensation, et appliquer en entrée le signal converti à l'émetteur-récepteur optique par l'intermédiaire du connecteur (102).

2. Procédé selon la revendication 1, comprenant en outre les étapes ci-dessous consistant à :

déterminer un second coefficient de compensation d'une extrémité de réception pour égaliser un brouillage de retour et compenser une perte d'insertion ; et
compenser un second signal numérique au niveau de l'extrémité de réception, sur la base du second coefficient de compensation, pour obtenir un second signal de compensation ;
dans lequel le second signal numérique est un signal obtenu en mettant en œuvre une conversion analogique-numérique sur un signal fourni en sortie à partir de l'émetteur-récepteur optique et transmis par l'intermédiaire du connecteur.

3. Procédé selon la revendication 1, comprenant en outre les étapes ci-dessous consistant à :

compenser un second signal numérique au niveau d'une extrémité de réception, sur la base du premier coefficient de compensation, pour obtenir un second signal de compensation ;
dans lequel le second signal numérique est un signal obtenu en mettant en œuvre une conversion analogique-numérique sur un signal fourni en sortie à partir de l'émetteur-récepteur optique et transmis par l'intermédiaire du connecteur.

4. Procédé selon la revendication 1, dans lequel le circuit ASIC est connecté à l'émetteur-récepteur optique par l'intermédiaire du connecteur, et l'étape consistant à déterminer le premier coefficient de compensation de l'extrémité de transmission pour égaliser un brouillage de retour et compenser une perte d'insertion comprend l'étape ci-dessous consistant à :
déterminer le premier coefficient de compensation de l'extrémité de transmission pour égaliser le brouillage de retour et compenser la perte d'insertion, en utilisant un algorithme d'égalisation adaptatif prédéfini, ladite étape comprenant les étapes ci-dessous consistant à :

obtenir une erreur estimée e(n), e(n)=u(n)-y(n), dans laquelle u(n) est, à l'instant n, un signal après une conversion analogique-numérique sur le premier signal numérique et avant un transit par le connecteur, et y(n) est le premier signal de sortie à l'instant n ;
obtenir une fonction de coût J sur la base de l'erreur estimée e(n), J=E{[u(n)-y(n)]^2}, dans laquelle E représente une espérance mathématique ;

obtenir $y(n) = \sum_{i=0}^{N-1} w(n)d(n-i)$ , dans lequel w(n) est le premier coefficient de compensation à l'instant n, et w(n+1)=w(n)+μ*d(n)**e(n), d(n) est, à l'instant n, un signal après une conversion analogique-numérique sur le premier signal numérique et qui a transité par le connecteur, μ est un facteur de pas ; et
déterminer une valeur du premier coefficient de compensation sur la base de la fonction de coût J et de y(n).

5. Procédé selon la revendication 1, dans lequel le circuit ASIC est connecté à l'émetteur-récepteur optique par l'intermédiaire du connecteur, et l'étape consistant à déterminer le premier coefficient de compensation de l'extrémité de transmission pour égaliser un brouillage de retour et compenser une perte d'insertion comprend les étapes ci-dessous consistant à :

obtenir deux ensembles de coefficients de compensation ou plus en utilisant une caractéristique de réponse en fréquence prédéfinie (301) ; et
pré-compenser le premier signal numérique sur la base de chaque ensemble de coefficients de compensation, respectivement, et déterminer un ensemble de coefficients de compensation qui correspond à un signal pré-compensé avec une qualité la plus optimale comme étant le premier coefficient de compensation (302).

6. Procédé selon la revendication 1, dans lequel le circuit ASIC est connecté à l'émetteur-récepteur optique par l'intermédiaire du connecteur, et l'étape consistant à déterminer le premier coefficient de compensation de l'extrémité de transmission pour égaliser un brouillage de retour et compenser une perte d'insertion comprend l'étape ci-dessous consistant à :
déterminer le premier coefficient de compensation de l'extrémité de transmission en utilisant une manière prédéfinie d'insérer une séquence d'apprentissage (401), ladite étape comprenant les étapes ci-dessous consistant à :

déterminer une séquence d'apprentissage x(i), x(i+1), ..., x(i+P-1) présentant une longueur P, transmise par l'extrémité de transmission, et des données d'apprentissage $x_1(i)$, $x_1(i+1)$, ..., $x_1(i+P-1)$ présentant une longueur P, reçues par une extrémité d'entrée du connecteur ;

mettre en œuvre une transformée de Fourier sur les données d'apprentissage reçues par l'extrémité d'entrée du connecteur pour obtenir $X_1(k)=FFT(x_1)$ ;

déterminer des données d'apprentissage $x_2(i)$, $x_2(i+1)$, ..., $x_2(i+P-1)$, présentant une longueur P, reçues par l'extrémité de sortie du connecteur, et mettre en œuvre une transformée de Fourier sur celles-ci pour obtenir $X_2(k)=FFT(x_2)$ ; et

déterminer la fonction de transfert en tant que $H(k) = \dfrac{X_2(k)}{X_1(k)}$ , et obtenir le premier coefficient de compensation $h(n) = \dfrac{IFFT(\frac{1}{H(k)})}{}$ sur la base de la fonction de transfert, dans lequel h(n) représente un coefficient d'un filtre pour une compensation.

7. Dispositif de compensation de perte, appliqué à un scénario où un circuit intégré à application spécifique (ASIC) et un module optique comprenant un émetteur-récepteur optique sont séparés, **caractérisé en ce que** le dispositif de compensation de perte comprend: un premier module de détermination (11) et un premier module de compensation (12), dans lequel :

le premier module de détermination (11) est configuré de manière à déterminer un premier coefficient de compensation d'une extrémité de transmission pour égaliser un brouillage de retour et compenser une perte d'insertion, dans lequel le brouillage de retour et la perte d'insertion se produisent au niveau d'interfaces d'un connecteur et de câblages internes du module optique ; et

le premier module de compensation (12) est configuré de manière à pré-compenser un premier signal numérique au niveau de l'extrémité de transmission, sur la base du premier coefficient de compensation, pour obtenir un premier signal de compensation, mettre en œuvre une conversion numérique-analogique sur le premier signal de compensation, et appliquer en entrée le signal converti à l'émetteur-récepteur optique par l'intermédiaire du connecteur.

8. Dispositif selon la revendication 7, dans lequel le dispositif comprend en outre un second module de compensation (13) et un second module de détermination (14), dans lequel :

le second module de détermination (13) est configuré de manière à déterminer un second coefficient de compensation d'une extrémité de réception pour égaliser un brouillage de retour et compenser une perte d'insertion ; et

le second module de compensation (14) est configuré de manière à compenser un second signal numérique au niveau de l'extrémité de réception, sur la base du second coefficient de compensation, pour obtenir un second signal de compensation ;

dans lequel le second signal numérique est un signal obtenu en mettant en œuvre une conversion analogique-numérique sur un signal fourni en sortie à partir de l'émetteur-récepteur optique et transmis par l'intermédiaire du connecteur.

9. Dispositif selon la revendication 7, dans lequel le dispositif comprend en outre un second module de compensation (14) configuré de manière à compenser un second signal numérique au niveau d'une extrémité de réception, sur la base du premier coefficient de compensation, pour obtenir un second signal de compensation ;

dans lequel le second signal numérique est un signal obtenu en mettant en œuvre une conversion analogique-numérique sur un signal fourni en sortie à partir de l'émetteur-récepteur optique et transmis par l'intermédiaire du connecteur.

10. Dispositif selon la revendication 7, dans lequel le circuit ASIC est connecté à l'émetteur-récepteur optique par l'intermédiaire du connecteur ;

le premier module de détermination (11) est en outre configuré de manière à déterminer le premier coefficient de compensation, en utilisant un algorithme d'égalisation adaptatif prédéfini, et le premier module de détermination (11) est en outre configuré de manière à :

obtenir une erreur estimée e(n), e(n)=u(n)-y(n), dans laquelle u(n) est, à l'instant n, un signal après une conversion analogique-numérique sur le premier signal numérique et avant un transit par le connecteur, et y(n) est le premier signal de sortie à l'instant n ;

obtenir une fonction de coût J sur la base de l'erreur estimée e(n), $J=E\{[u(n)-y(n)]^2\}$, dans laquelle E représente une espérance mathématique ;

obtenir $y(n) = \sum_{i=0}^{N-1} w(n)d(n-i)$ , dans lequel w(n) est le premier coefficient de compensation à l'instant n, et $w(n+1)=w(n)+\mu*d(n)**e(n)$, d(n) est, à l'instant n, un signal après une conversion analogique-numérique sur le premier signal numérique et qui a transité par le connecteur, $\mu$

est un facteur de pas ; et

déterminer une valeur du premier coefficient de compensation sur la base de la fonction de coût J et de y(n).

11. Dispositif selon la revendication 7, dans lequel le circuit ASIC est connecté à l'émetteur-récepteur optique par l'intermédiaire du connecteur ;

le premier module de détermination (11) est en outre configuré de manière à :

obtenir deux ensembles de coefficients de compensation ou plus, en utilisant une caractéristique de réponse en fréquence prédéfinie ; et

pré-compenser le premier signal numérique sur la base de chaque ensemble de coefficients de compensation, respectivement, et déterminer un ensemble de coefficients de compensation qui correspond à un signal pré-compensé avec une qualité la plus optimale comme étant le premier coefficient de compensation.

12. Dispositif selon la revendication 7, dans lequel le circuit ASIC est connecté à l'émetteur-récepteur optique par l'intermédiaire du connecteur,

le premier module de détermination (11) est en outre configuré de manière à déterminer le premier coefficient de compensation de l'extrémité de transmission en utilisant une manière prédéfinie d'insérer une séquence d'apprentissage, et le premier module de détermination (11) est en outre configuré de manière à :

déterminer une séquence d'apprentissage x(i), x(i+1), ..., x(i+P-1) présentant une longueur P, transmise par l'extrémité de transmission, et des données d'apprentissage $x_1(i)$, $x_1(i+1)$, ..., $x_1(i+P-1)$ présentant une longueur P, reçues par une extrémité d'entrée du connecteur ;

mettre en œuvre une transformée de Fourier sur les données d'apprentissage reçues par l'extrémité d'entrée du connecteur pour obtenir $X_1(k)=FFT(x_1)$ ;

déterminer des données d'apprentissage $x_2(i)$, $x_2(i+1)$, ..., $x_2(i+P-1)$, présentant une longueur P, reçues par l'extrémité de sortie du connecteur, et mettre en œuvre une transformée de Fourier sur celles-ci pour obtenir $X_2(k)=FFT(x_2)$ ; et

déterminer la fonction de transfert en tant que

$$H(k) = \frac{X_2(k)}{X_1(k)}$$

, et obtenir le premier coefficient de compensation $h(n) = \dfrac{\text{IFFT}(\frac{1}{H(k)})}{}$ sur la base de la fonction de transfert, dans lequel h(n) représente un coefficient d'un filtre pour une compensation.

13. Support de stockage comprenant un programme stocké sur celui-ci, dans lequel le programme est exécuté pour mettre en œuvre le procédé selon l'une quelconque des revendications 1 à 6.

**FIG. 1**

| Determine a first compensation coefficient of a transmitting end to equalize return interference and compensate for insert loss | 101 |

| Pre-compensate a first digital signal based on the first compensation coefficient to obtain a first compensation signal, perform digital-to-analog conversion on the first compensation signal, and input the converted signal to an optical transceiver through a connector | 102 |

**FIG. 2**

| Determine a second compensation coefficient of a receiving end by using a preset adaptive equalization algorithm | 201 |

| Compensate the second digital signal based on the second compensation coefficient to obtain a second compensation signal | 202 |

**FIG. 3**

**FIG. 4**

**FIG. 5**

FIG. 6

| | |
|---|---|
| Obtain two or more sets of compensation coefficients by using a preset frequency response characteristic | 301 |
| Pre-compensate a first digital signal based on each set of compensation coefficients, and determine a set of compensation coefficients which corresponds to a pre-compensated signal with a best quality as the first compensation coefficient | 302 |
| Pre-compensate the first digital signal based on the first compensation coefficient to obtain a first compensation signal, perform digital-to-analog conversion on the first compensation signal, and then input the converted signal to an optical transceiver through a connector | 303 |
| Compensate a second digital signal at a receiving end based on the first compensation coefficient to obtain a second compensation signal, wherein the second digital signal is a signal obtained by performing analog-to-digital conversion on a signal outputted from the optical transceiver and transmitted through the connector | 304 |

FIG. 7

FIG. 8

Determine a first compensation coefficient of a transmitting end by using a preset manner of inserting training sequence — 401

Pre-compensate a first digital signal based on the first compensation coefficient to obtain a first compensation signal, and perform digital-to-analog conversion on the first compensation signal, and then input the inverted signal to an optical transceiver through a connector — 402

Determine a second compensation coefficient of a receiving end — 403

Compensate a second digital signal at the receiving end based on the second compensation coefficient to obtain a second compensation signal, wherein the second digital signal is a signal obtained by performing analog-to-digital conversion on a signal outputted from the optical transceiver and transmitted through the connector — 404

**FIG. 9**

**FIG. 10**

First determining
module 11

First compensating
module 12

Second compensating
module 13

Second determining
module 14

Loss compensation device

**FIG. 11**

**REFERENCES CITED IN THE DESCRIPTION**

**Patent documents cited in the description**

- CN 104348553 A1